# EUROPEAN PATENT SPECIFICATION

(11) **EP 0 767 727 B1**
(45) Date of publication and mention of the grant of the patent: **09.09.1998**
(21) Application number: 95920170.8
(22) Date of filing: 31.05.1995
(51) Int. Cl.: B29C 44/04

(54) **FORMED FOAMED PLASTICS MATERIAL**
GEFORMTES KUNSTSTOFFSCHAUMMATERIAL
MATIERE PLASTIQUE CELLULAIRE PROFILEE

(30) Priority: 28.06.1994 GB 9412980; 20.12.1994 GB 9425635
(43) Date of publication of application: 16.04.1997
(73) Proprietor: ANGLIAN WINDOWS LIMITED, Norwich, Norfolk NR6 6EJ (GB)
(72) Inventor: CUBITT, Julian, Norwich Norfolk NR6 7QE (GB)
(74) Representative: Stone, Patrick
(86) International application number: GB9501239
(87) International publication number: WO9600643

(56) References cited:
- CA-A- 749 861
- CH-A- 642 901
- GB-A- 1 519 844
- US-A- 4 221 624
- US-A- 4 546 022

## Description

This invention relates to a method of manufacturing a formed plastics component at least a part of which comprises foamed plastics material and also to a rigid plastics extrusion produced by the method.

The document CH-A-642 901 discloses a method of manufacturing a formed, foamed plastics material according to which a mixture of ground recycled polyvinylchloride (PVC) is foam extruded through a die and calibrating device under such conditions as to produce a rigid formed extrusion which is machinable and has a density of the same order as timber.

According to the invention, in its most general aspect, there is provided a method of manufacturing a formed, foamed plastics material according to which a mixture comprising at least 90 per cent recycled polyvinylchloride (PVC) in the form of ground or chipped used PVC bottles together with a blowing agent is foam extruded through a die and calibrating device under such conditions as to produce a rigid formed extrusion which is machinable and has a density of the same order as timber.

According to another aspect of the invention, there is provided a foamed plastics rigid extrusion comprising at least 90 percent recycled polyvinchlorde (PVC) constituted by ground or chipped used PVC bottles and produced by foam extrusion using a blowing agent through a die and calibrating means under such conditions as to impart to the extrusion machinability and a density of the same order as timber.

In another more specific and preferred aspect of the invention, the recycled polyvinylchloride is coextruded with a skin of virgin polyvinylchloride to produce a composite component which is machinable and has a mean density of the same order as timber. The amount of virgin polyvinylchloride used in the coextrusion is preferably not more than about 10 percent weight of the amount of recycled polyvinylchloride.

The present invention aims, in particular, to provide a foamed plastics extrusion useful as a structural member in the manufacture of window and door frames. To this end, the density of the extruded component, or at least the foamed part thereof, preferably lies lying between 0.7 and 0.9, conveniently about 0.85. Coextruding a skin of virgin polyvinylchloride adds weatherability.

It will be appreciated that, although it is common practice for manufacturers of Polyvinylchloride (PVC) window and door frames to recycle waste PVC material from the manufacture of windows and doors, in this case the waste material is not foam extruded. Waste from the manufacture of PVC window and door frames consists of a relatively high molecular weight polymer, not preferable for foam extrusion. However, according to the present invention, the recycled polyvinylchloride (PVC) compound is a low molecular weight polymer, obtained from recycled PVC bottles, in powdered or chip form, preferably the former.

Recycled material from PVC bottles is material which was originally formulated for injection moulding or blow moulding, and it would normally be considered that such material was unsuitable for extrusion moulding.

A preferred extrusion melt for the foamed component or composite part thereof comprises at least 95 percent recycled PVC. Generally, additives such as U/V stabilisers, impact modifiers and heat stabilisers are not added, as these are present in the recycled PVC, but about 1 percent by weight blowing agent is added to the melt, and if desired colouring pigment, typically about 1.0 to 2.0 percent by weight, is also added. If the resulting component will not be exposed to weathering, or if it is coextruded with a virgin PVC skin for weathering protection, the addition of pigment to the melt for the foam extrusion may not be necessary.

A highly preferred foam extrusion step employs the Celuka process. This process is preferably carried out using an endothermic blowing agent. This blowing agent takes in heat present due to shearing which occurs in the extrusion step. In this way a rigid, fully machinable extrusion can be obtained with a density in the range 0.7 to 0.9. The material can also have an acceptable level of fire resistance and be hot plate weldable.

It is also preferred for the endothermic blowing agent to he supported by a carrier which is incompatible with the PVC in the melt. This reduces the tendency of the melt to stick to the surface of the hot die, burn and in turn build up a deposit on the surface, which is detrimental to the product, especially in view of relatively low thermal stability of the recycled PVC.

The use of an endothermic blowing agent is an important feature of the invention. Especially in conjunction with its supporting carrier incompatible with the low molecular weight recycled PVC in the melt, the whole foam extrusion process can be carried out with an unusually low temperature profile, which results in a structural component. Thus, the resulting extrusion, with or without a coextruded skin of virgin PVC, can then be used as a timber substitute in the manufacture of such items as window frames, door frames, fascia boards, and for other building material uses.

It will be understood that the present invention provides the aforesaid rigid, formed extrusion which is machinable at relatively low cost. Normally, a high density foamed extrusion of PVC would be sufficiently expensive to produce that it would not he a marketable product. However, by virtue of the use of recycled PVC, in conjunction with the realisation that no additives other than a small amount of blowing agent require to he added to the melt, the present invention provides an extrusion which is highly cost effective.

According to a further feature of the invention, the extruded component can he produced with a hollow core. This can be achieved by provision of a central mandrel in the extrusion die, which mandrel has air blown through it to exert outward pressure on the extrusion melt in order to counteract the inward foaming resulting from the Celuka process. Subsequently, a rod of metal, e.g. aluminium, may be inserted through the hollow core for reinforcement purposes, if the conditions of use demand a component of exceptionally high rigidity.

A still further feature of the invention concerns the method of and apparatus for production of the rigid, formed extruded component. Preferably, the components required to produce the foamed extrusion, or at least the foamed part thereof, are dosed into a feed hopper directly feeding the entry port of a rotating screw extruder which extrudes the extrusion melt through a die. Supplementary dosers are not required, as generally the only components to be dosed are the recycled PVC and the blowing agent. The virgin PVC is not foamed, and so a blowing agent is not added to it. It will be appreciated that, in the case of a coextrusion, any colouring pigment requires to be added only to the virgin PVC melt, along with very small amounts of additives such as impact modifiers and light stabilisers.

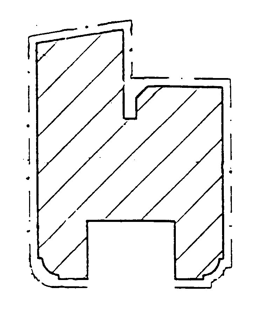

A preferred method and extrusion in accordance with the invention is now described by way of example with reference to the accompanying drawing, which shows in cross section one embodiment of coextruded component in accordance with the invention.

An extrusion mixture is prepared comprising approximately 97 percent recycled PVC in the form of a ground, low molecular polymer derived from PVC packaging such as PVC bottles for example. The mixture also includes about 1.3 percent endothermic blowing agent. All the ingredients are added to a hopper/mixer directly feeding an extrusion die.

The mixture is then extruded through a rotating screw, extruder barrel and through the die, under controlled temperature conditions. The die has an annular extrusion aperture, thereby to allow sizing to take place in an immediately downstream calibrating means, where inward foaming by the Celuka process takes place under controlled cooling conditions. The extent to which foaming takes place is limited by the use of an endothermic blowing agent, which takes in heat generated by shearing of the extrusion melt in the extruder barrel.

The above-described method thereby results in a formed rigid extrusion which can be used as a timber substitute, being fully machinable and capable of receiving and holding screws and nails. The extrusion also has a density of approximately 0.85, as compared with a typical density of about 0.55 for timbers conventionally used in the production of window and door frames.

In a preferred modification of the above-described method, the recycled PVC is coextruded by conventional techniques for coextrusion, with a skin of virgin PVC. Again, a mean density in the range 0.7 to 0.9 is obtainable, providing a rigid, machinable product which can be used, for example, in door frames and fascia boards.

The accompanying drawing shows one embodiment of a structural member for a sash window frame produced as a coextrusion in accordance with the invention. The dash-dot line around the periphery of the component shows the part of the periphery where a skin of virgin PVC is provided. The recess where the skin is not provided receives the glazing unit.

## Claims

1. A method of manufacturing a formed, foamed plastics material according to which a mixture comprising at least 90 percent recycled polyvinylchloride (PVC) in the form of ground or chipped used PVC bottles together with a blowing agent is foam extruded through a die and calibrating device under such conditions as to produce a rigid formed extrusion which is machinable and has a density of the same order as timber.

2. A method according to claim 1, wherein inward foaming is carried out by the Celuka process.

3. A method according to claim 2, in which the mixture to be extruded also includes an endothermic blowing agent.

4. A method according to any of claims 1 to 3, in which the mixture to be extruded includes 0.7 to 2.0, preferably 1 to 1.6 percent, blowing agent.

5. A method according to claim 4, according to which the endothermic blowing agent is supported by a carrier material incompatible with the recycled PVC melt.

6. A method according to any of claims 1 to 5, according to which the recycled PVC is coextruded with virgin PVC which forms an unfoamed skin on at least part of the periphery of the foamed extrusion.

7. A method according to claim 6, according to which the virgin PVC constitutes not more than 10 percent by weight of the amount of recycled PVC.

8. A method according to any of claims 1 to 7, according to which the recycled PVC is foamed with a hallow core.

9. A method according to claim 8 when appendant to claim 2, according to which the hollow core is formed by a central mandrel located in the die and through which air is blown to counteract the inward foaming produced by the Celuka process.

10. A method according to claim 9, according to which metal reinforcement is inserted into the hollow core of the foamed extrusion.

11. A foamed plastics rigid extrusion comprising at least 90 percent recycled polyvinylchloride (PVC) constituted by ground or chipped used PVC bottles and produced by foam extrusion using a blowing agent through a die and calibrating means under such conditions as to impart to the extrusion machinability and a density of the same order as timber.

12. A foamed extrusion according to claim 11, coextruded with an unfoamed virgin PVC skin on at least part of its periphery.

13. A foamed extrusion according to claim 11 or claim 12, having a mean density between 0.7 and 0.9.

14. A foamed extrusion according to any of claims 11 to 13, foamed with a hollow core in which metallic reinforcement is inserted.

15. A rigid structural member for a window or door frame, comprising a foamed extrusion of recycled polyvinylchloride (PVC) constituted by ground or chipped used PVC bottles, coextruded with a virgin PVC skin over at least part of its periphery, the member having a mean density between 0.7 and 0.9 and being machinable in the manner of timber.

## Patentansprüche

1. Verfahren zum Herstellen eines geformten, geschäumten Kunststoffmaterials, bei dem ein Gemisch mit mindestens 90% recyceltem Polyvinylchlorid (PVC) in Form von gemahlenen oder gebrochenen, gebrauchten PVC-Flaschen zusammen mit einem Blasmittel durch eine Form- und Eichvorrichtung unter solchen Konditionen schaumextrudiert wird, daß eine starre, geformte Extrusion entsteht, die bearbeitbar ist und die eine Dichte etwa von Holz hat.

2. Verfahren nach Anspruch 1, bei dem ein Innenschäumen durch den Celuka-Prozess ausgeführt wird.

3. Verfahren nach Anspruch 2, bei dem das zu extrudierende Gemisch ferner ein endothermes Blasmittel aufweist.

4. Verfahren nach einem der Ansprüche 1 - 3, bei dem das zu extrudierende Gemisch 0,7 - 2,0, vorzugsweise 1 - 1,6%, Blasmittel enthält.

5. Verfahren nach Anspruch 4, bei dem das endotherme Blasmittel durch ein Trägermaterial gestützt wird, das mit der recycelten PVC-Schmelze inkompatibel ist.

6. Verfahren nach einem der Ansprüche 1 - 5, bei dem das recycelte PVC mit frischem PVC koextrudiert wird, das eine ungeschäumte Haut auf mindestens einem Teil des Umfangs der geschäumten Extrusion bildet.

7. Verfahren nach Anspruch 6, bei dem das frische PVC nicht mehr als 10 Gewichtsprozent der Menge an recyceltem PVC darstellt.

8. Verfahren nach einem der Ansprüche 1 - 7, bei dem das recycelte PVC mit einem Hohlkern geschäumt ist.

9. Verfahren nach Anspruch 8, abhängig von Anspruch 2, bei dem der Hohlkern durch einen zentralen Dorn im Formwerkzeug geformt ist und durch den Luft geblasen wird, um der Innenschäumung, die nach dem Celuka-Prozess vorgenommen wird, entgegenzuwirken.

10. Verfahren nach Anspruch 9, bei dem eine Materialverstärkung in den Hohlkern der geschäumten Extrusion eingebracht wird.

11. Geschäumte, steife Kunststoff-Extrusion mit mindestens 90% recyceltem Polyvinylchlorid (PVC), das durch Mahlen oder Brechen gebrauchter PVC-Flaschen dargestellt und durch Schaumextrusion unter Verwendung eines Blasmittels durch eine Form- und Eichvorrichtung unter solchen Bedingungen erzeugt wird, daß der Extrusion eine Bearbeitbarkeit und eine Dichte entsprechend der von Holz erteilt wird.

12. Geschäumte Extrusion nach Anspruch 11, die mit einer ungeschäumten frischen PVC-Haut auf mindestens einem Teil des Umfangs koextrudiert wird.

13. Geschäumte Extrusion nach Anspruch 11 oder 12, mit einer mittleren Dichte zwischen 0,7 und 0,9.

14. Geschäumte Extrusion nach einem der Ansprüche 11 - 13, die mit einem Hohlkern geschäumt ist, in den eine metallische Verstärkung eingesetzt ist.

15. Steifes Bauelement für einen Fenster- oder Türrahmen, mit einer geschäumten Extrusion aus recyceltem Polyvinylchlorid (PVC), das durch Mahlen oder Brechen gebrauchter PVC-Flaschen dargestellt wird, und mit einer frischen PVC-Haut über mindestens einen Teil seines Umfangs koextrudiert wird, wobei der Gegenstand eine mittlere Dichte zwischen 0,7 und 0,9 besitzt und ähnlich wie Holz bearbeitbar ist.

## Revendications

1. Procédé de fabrication de matières plastiques en mousse, ouvrées, selon lesquelles un mélange comprenant au moins 90 pourcents de polyvinylchlorure (PVC) recyclé sous la forme de bouteilles PVC utilisées, broyées ou fragmentées, ensemble avec un gonflant est extrudé sous forme d'une mousse à travers une filière et un dispositif de calibrage dans des conditions permettant de produire une extrusion rigide ouvrée qui peut être usinée et présente une densité du même ordre que celle de bois de construction.

2. Procédé selon la revendication 1, selon lequel un moussage vers l'intérieur est exécuté selon le procédé Celuka.

3. Procédé selon la revendication 2, selon lequel le mélange devant être extrudée comporte en outre un gonflant endothermique.

4. Procédé selon l'une des revendications 1 a 3, selon lequel le mélange à extruder comporte 0,7 à 2,0 de préférence 1 à 1,6 pourcents de gonflant.

5. Procédé selon la revendication 4, selon lequel le gonflant endothermique est supporté par un matériau porteur incompatible avec la fusion PVC recyclée.

6. Procédé selon l'une des revendications 1 à 5, selon lequel le PVC recyclé est coextrudé avec du PVC vierge qui forme une peau non moussée sur au moins une partie de là périphérie de l'extrusion en mousse.

7. Procédé selon la revendication 6, selon lequel le PVC vierge ne constitue pas plus que 10 pourcents en poids de la quantité du PVC recyclé.

8. Procédé selon l'une des revendications 1 à 7, selon lequel le PVC recyclé est moussé avec un noyau creux.

9. Procédé selon la revendication 8 dans son rattachement à la revendication 2, selon lequel le noyau creux est formé par un mandrin central disposé dans la filière et à travers lequel de l'air est soufflé pour agir contre le moussage vers l'intérieur produit par le procédé Celuka.

10. Procédé selon la revendication 9, selon lequel un renforcement métallique est placé dans le noyau creux de l'extrusion en forme de mousse ou moussé.

11. Extrusion rigide en matière plastique moussée comprenant au moins 90 pourcents de polyvinylchlorure (PVC) recyclé formé par des bouteilles PVC utilisées broyées ou fragmentées et produite par extrusion avec moussage en utilisant un gonflant, par l'intermédiaire d'une filière et de moyens de calibrage, dans des conditions conférant à l'extrusion la faculté d'être usinée et une densité du même ordre que celle de bois de construction.

12. Extrusion en mousse selon la revendication 11, coextrudée avec une peau en PVC vierge non moussée sur au moins une partie de sa périphérie.

13. Extrusion en mousse selon la revendication 11 ou la revendication 12, comprenant une densité moyenne entre 0,7 et 0,9.

14. Extrusion en mousse selon l'une des revendications 11 à 13, moussée avec un noyau creux dans lequel est introduit un renforcement métallique.

15. Organe de structure rigide pour un cadre de fenêtre ou de porte, comportant une extrusion en mousse d'un polyvinylchlorure (PVC) recyclé constitué de bouteilles PVC utilisées broyées ou fragmentées, coextrudées avec une peau en PVC vierge sur au moins une partie de sa périphérie, l'organe ayant une densité moyenne entre 0,7 et 0,9 et étant usinable a la manière de bois de construction.
